# EUROPEAN PATENT SPECIFICATION

(11) **EP 1 570 730 B1**
(45) Date of publication and mention of the grant of the patent: **18.03.2009**
(21) Application number: 05075167.6
(22) Date of filing: 24.01.2005
(51) Int. Cl.: A01K 5/02

(54) **A transport installation for bulk material and a feeding installation provided with such a transport installation**
Transportanlage zum Transportieren von Schüttgut und Fütterungsanlage mit einer solcher Transportanlage
Installation pour le transport de matériaux en vrac et installation d'affouragement munie d'une telle installlation pour le transport

(30) Priority: 02.03.2004 NL 1025616
(43) Date of publication of application: 07.09.2005
(73) Proprietor: Lely Enterprises AG, 6300 ZUG (CH)
(72) Inventor: Voogd, Lucien Eliza Niels, 4143 HG Leerdam (NL)
(74) Representative: Corten, Maurice Jean F.M.

(56) References cited:
- EP-A- 0 254 171
- EP-A- 1 300 072
- GB-A- 498 815
- GB-A- 522 270
- US-A- 5 983 833

## Description

The invention relates to a transport installation for bulk material according to the preamble of claim 1.

Such an installation is known from document GB-A-498 815. Another similar installation is known from European patent application EP-1161861-A2. This document discloses an installation with a robot arm for displacing an amount of feed from an intermediate storage container. The robot arm comprises a gripper for gripping feed.

Although the installation functions properly, no solution is given to fill the intermediate storage container automatically.

The invention aims at providing an improved transport installation in which the intermediate storage container can be filled automatically.

This is achieved by means of a transport installation according to claim 1, characterized in that the transport installation comprises a storage container for storing bulk material, and in that there are provided intermediate transport devices for filling the intermediate storage container from the storage container only by gravitational force. Owing to the fact that the intermediate storage container can be filled with bulk material from a storage container only by gravitational force, the intermediate storage container is filled automatically.

In a favourable embodiment of the transport installation, the intermediate transport devices comprise a tube-shaped member having an inflow aperture, disposed at a high level and connected to the storage container, and having an outflow aperture, disposed at a low level and debouching into the intermediate storage container below the normal level of the bulk material. By means of this construction it is possible for the bulk material in the intermediate storage container to act itself as a closing device for the storage container.

It is further advantageous if the outflow aperture is disposed in such a way that the amount of bulk material in the filled intermediate storage container is smaller than or equal to the content of the transport device. This makes it possible to remove in one action the entire contents of the intermediate storage container, so that the latter can be refilled completely from the storage container. This continuous replacement prevents the bulk material from caking and becoming stale.

In a further advantageous embodiment, the transport device comprises a gripper. A gripper can be used in a flexible manner for many sorts of bulk material and can also be used, if necessary, to take a part from products forming a larger whole.

It is advantageous if the gripper is a double gripper. Double grippers can be designed symmetrically, which is advantageous to the forces to be applied by the gripper.

In particular, the gripper comprises a weighing device for weighing the contents of the gripper. By means of this embodiment it is possible to determine the weight in a lifted, free spational position. This provides a measurement that is accurate and free from operational failure.

In a further embodiment, the transport installation comprises a rail for displacing the gripper. By displacing the gripper in this manner above the ground level, there is no hindrance by obstacles and there is made an efficient use of the available space.

In particular, the inner shape of the intermediate storage container is adapted to the outer shape of the gripper. This makes it possible to have the gripper scrape along the inner wall of the intermediate storage container so that caked bulk material, if any, can be removed.

In a further particular embodiment of the invention, the inner shape of the intermediate storage container is adapted to the outer shape of an opened gripper. This makes it possible to remove in one action the contents of the entire intermediate storage container by means of an opened gripper.

In particular, the transport installation is suitable for transporting pellet-shaped or granular feed. It has been found that the embodiment claimed is very suitable for this type of bulk material, as precisely this type has the ideal physical properties, such as density, viscosity and adhesiveness, to flow from a storage container into an open space to a particular level.

In a further embodiment of the invention, the gripper is an automatically operating gripper and the transport installation comprises a controlling computer for controlling the automatically operating gripper.

The invention further relates to a feeding installation as claimed in claim 12. By means of the transport installation according to the invention it is possible to transport, besides feed from the storage container, also other sorts of feed, such as silage, to the metering container. Several sorts of feed can be fed by means of the same installation.

A particularly compact feeding installation is obtained if several troughs are disposed around a central vertical axis.

The invention will now be explained in further detail with reference to the accompanying drawing, in which:

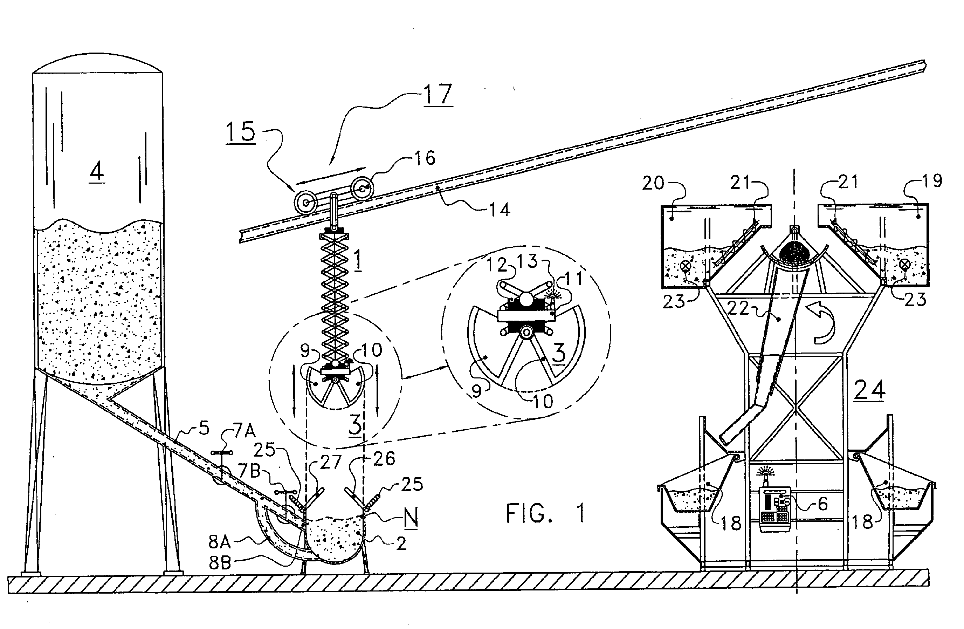

Figure 1 is a cross-sectional view of an exemplary embodiment according to the invention.

Figure 1 shows a transport installation 1 for bulk material with an intermediate storage container 2 having an aperture at its upper side and with a transport device 3 for transporting bulk material from the intermediate storage container 2, the transport installation 1 comprising a storage container 4 for storing bulk material, and intermediate transport devices 5 being present for filling the intermediate storage container 2 from the storage container 4 only by gravitational force. The storage container 4 is shown as a silo fastened on legs. The intermediate transport devices 5 comprise a tube-shaped member 5 having an inflow aperture, disposed at a high level and connected to the storage container 4, and having an outflow aperture, disposed at a low level and debouching into the intermediate storage container 2 below the normal level N of the bulk material. The gripper 3 is an automatically operating gripper and the transport installation 1 comprises a controlling computer 6 for controlling the automatically operating gripper 3.

The tube-shaped member 5 is shown as a round tube, but may also have an other cross-section than a round one. An automatically controllable valve 7A is disposed in the tube. A valve 7A is in particular advantageous in a non-shown situation in which several storage containers are connected to the same intermediate storage container 2. It is then possible to transport optionally different sorts of bulk material via the same intermediate storage container 2.

In the embodiment shown, the tube-shaped member is bifurcated into two tube-shaped sub-members 8A and 8B, both debouching into the intermediate storage container 2. The sub-members 8A and 8B debouch into the intermediate storage container at different levels. In combination with the valve 7B in the upper sub-member 8B, it is possible to supply a small portion to the intermediate storage container 2 in the closed position of the valve 7B and to supply a big portion to the intermediate storage container 2 in the opened position of the valve 7B. All valves 7A, 78 are capable of being controlled by the central controlling computer 6, but may also be designed as manually operated ones.

In the embodiment shown, the gripper 3 of the transport installation 1 is a double gripper 3, i.e. a gripper 3 with two symmetric gripping elements 9, 10 that are movable towards each other. However, the gripper 3 may also be designed differently, for example as a single gripper, a so-called 'bucket'. The gripper 3 comprises a weighing device 11 for weighing the contents of the gripper 3, which is disposed between the gripping elements 9, 10 and the lifting frame 12. Said weighing device 11 is designed so as to have only one single weighing cell and is consequently relatively cheap. The measured weight can be transferred in a wireless manner to the central controlling computer 6 by means of a small transmitting device 13.

The inner shape of the intermediate storage container 2 is adapted to the outer shape of the opened gripper 3. The outflow aperture is disposed in such a way that the amount of bulk material in the filled intermediate storage container is smaller than or equal to the content of the gripper 3. The upper side of the intermediate storage container 2 comprises an oblique, raised edge 25. Said oblique edge 25 makes it possible for the gripper 3 to be located not exactly above the intermediate storage container 2 for emptying the latter. The intermediate storage container 2 further comprises controllable covers 26, 27 at its upper side. Said covers serve as a protection against birds and weather influences. The covers 26, 27 are capable of being controlled by the central controlling computer 6. In a non-shown embodiment, the covers 26, 27 are controlled mechanically by the gripper 3.

The transport installation 1 further comprises a rail 14 for displacing the gripper 3. For this purpose, the gripper 3 is connected to a mobile unit 15 which is capable of being moved along the rail 14 by means of wheels 16. The wheels 16 are capable of being driven by means of an electric motor which is supplied with electricity by means of a (non-shown) cable. The control of the unit 15, i.e. lifting and moving along the rail, takes place by means of the central controlling computer 6.

In the embodiment shown, the transport installation 1 constitutes part of a feeding installation 17, which feeding installation 17 comprises at least a trough 18 and a metering container 19, 20 disposed above the trough 18, the metering container 19, 20 being capable of being filled by means of the transport installation 1 and the bulk material being capable of being metered from the metering container 19, 20 into the trough 18. The feeding installation 17 comprises several troughs 18 disposed around a central vertical axis. A similar feeding column is described in detail in WO-0038505 and will be explained hereinafter only briefly. The rail 14 extends to above the metering containers 19, 20, in such a way that it is possible for the gripper to replenish the metering containers 19, 20. By means of augers 21, controllable by the controlling computer 6, it is possible to meter feed from the metering containers 19, 20 into the chute 22. Said chute is rotatably fastened in the feeding column 24 and can optionally be moved by rotation to a specific feed trough 18. In the metering container 19, 20 there is disposed a level sensor 23 for determining the amount of feed still present in the metering container 19, 20. Said level sensor 23 is connected to the controlling computer 6.

In a non-shown embodiment, the transport installation 1 constitutes part of a feeding installation 17 in which the feed is directly put in a trough 18 by the gripper 3. In this situation a separate metering container is superfluous.

The operation of the feeding installation 17 is as follows. The level sensor 23 detects a level in a metering container 19, 20 and sends a signal to the controlling computer 6. The latter compares the measured level with a threshold value. If this level is below the threshold value, the controlling computer 6 moves the mobile unit 15 to above the intermediate storage container 2, which is filled with feed. The controlling computer 6 opens the entrance to the intermediate storage container 2 by opening the covers 26, 27. The gripper 3 is opened and lowered into the feed. The raised edge 25 ensures that the gripper 3, when being lowered, is moved to the middle of the intermediate storage container 2. The gripper 3 is subsequently closed by moving the two gripping elements 9, 10 towards each other. The edges of the two gripping elements 9, 10 then pass along the inner edge of the intermediate storage container 2 in such a way that the complete contents is gripped. Owing to the fact that the gripper 3 is located in front of the outflow aperture, it will close the outflow aperture, so that during the emptying of the intermediate storage container 2 no feed can flow into the intermediate storage container 2. When lifting the gripper 3 to the mobile unit 15, the outflow aperture of the chute 5 will be free again. Because no more feed is present in front of the outflow aperture, the weight of the feed in the silo will cause feed to flow into the intermediate storage container 2 until a certain level has been reached. This level will be approximately equal to the level of the upper side of the outflow aperture. If the gripper 3 is located sufficiently far from the intermediate storage container 2, the covers 26, 27 are closed again. During the lifting of the gripper 3 the weight of the gripper 3 with contents is measured by the weighing device 11. Via the transmitting device 13 the value is transferred in a wireless manner to the controlling computer 6. The latter subtracts the previously measured weight of the empty gripper 3 from said value. The mobile unit 15 is moved to above the metering container 19, 20, after which the gripper 3 is opened. The weight of the contents of the gripper 3 is used by the controlling computer 6 to update the stock of the storage container 4. In case of a stock below a particular threshold value an alarm is given. The measured weight can also be used for automatically calibrating the augers 21 of the metering containers 19, 20.

The feeding of an animal takes place as follows. An animal provided with a transponder reports at a trough 18 and is recognized in a known manner by means of the transponder. Subsequently, the controlling computer 6 determines, on the basis of a recipe stored in the memory, how much of which sort of feed has to be supplied to the animal. The chute 22 is directed towards the relevant trough 18 and the augers 21 of the relevant metering containers 19, 20 are rotated as many times as necessary for obtaining the amount of feed required. The feed subsequently falls through the chute 22 into the trough 18 and is available for the animal.

The invention is not limited to a transport device in the form of a gripper. The transport device may also be designed, for example, as a transport container which is capable of being moved or which is fastened to a belt. In this embodiment, the intermediate storage container may comprise at its lower side a cover which is adapted to be closed and by means of which the contents of the intermediate storage container can be dropped in one action into the transport container.

## Claims

1. A transport installation (1) for bulk material with an intermediate storage container (2) having an aperture at its upper side and with a transport device (3) for transporting bulk material from the intermediate storage container (2), the transport installation (1) comprising a storage container (4) for storing bulk material, **characterized in that** there is provided an intermediate transport device (5), for automatically filling the intermediate storage container (2) from the storage container (4) only by gravitational force until a certain normal level (N) of the bulk material in the intermediate storage container (2).

2. A transport installation (1) as claimed in claim 1, **characterized in that** the intermediate transport devices (5) comprise a tube-shaped member having an inflow aperture, disposed at a high level and connected to the storage container (4), and having an outflow aperture, disposed at a low level and debouching into the intermediate storage container (2) below the normal (N) level of the bulk material.

3. A transport installation (1) as claimed in claim 1 or 2, **characterized in that** the outflow aperture is disposed in such a way that the amount of bulk material in the filled intermediate storage container (2) is smaller than or equal to the content of the transport device (3).

4. A transport installation (1) as claimed in claim 1, 2 or 3, **characterized in that** the transport device comprises a gripper (3).

5. A transport installation (1) as claimed in claim 4, **characterized in that** the gripper (3) is a double gripper.

6. A transport installation (1) as claimed in claim 4 or 5, **characterized in that** the gripper (3) comprises a weighing device (11) for weighing the contents of the gripper (3).

7. A transport installation (1) as claimed in claim 4, 5 or 6, **characterized in that** the transport installation (1) comprises a rail (14) for displacing the gripper (3).

8. A transport installation (1) as claimed in any one of claims 4 to 7, **characterized in that** the inner shape of the intermediate storage container (2) is adapted to the outer shape of the gripper (3).

9. A transport installation (1) as claimed in claim 8, **characterized in that** the inner shape of the intermediate storage container (2) is adapted to the outer shape of an opened gripper (3).

10. A transport installation (1) as claimed in any one of claims 4 to 9, **characterized in that** the gripper (3) is an automatically operating gripper (3), and **in that** the transport installation (1) comprises a controlling computer (6) for controlling the automatically operating gripper (3).

11. A transport installation (1) as claimed in any one of the preceding claims, **characterized in that** the transport installation (1) is suitable for transporting pellet-shaped or granular feed.

12. A feeding installation (17) provided with a transport installation (1) as claimed in any one of the preceding claims, **characterized in that** the feeding installation (17) comprises at least a trough (18) and a metering container (19, 20) disposed above the trough (18), the metering container (19, 20) being capable of being filled by means of the transport installation (1) and the bulk material being capable of being metered from the metering container (19, 20) into the trough (18).

13. A feeding installation (17) as claimed in claim 12, **characterized in that** the feeding installation (17) comprises several troughs (18) disposed around a central vertical axis.

## Patentansprüche

1. Transportanlage (1) für Schüttgut mit einem Zwischenlagerungsbehälter (2), welcher eine Öffnung auf seiner Oberseite aufweist, und mit einer Transportvorrichtung (3) zum Transportieren von Schüttmaterial aus dem Zwischenlagerungsbehälter (2), wobei die Transportanlage (1) einen Lagerungsbehälter (4) zum Lagern des Schüttmaterials umfasst,
**dadurch gekennzeichnet, dass** eine dazwischen angeordnete Transportvorrichtung (5) vorgesehen ist zum automatischen Befüllen des Zwischenlagerungsbehälters (2) aus dem Lagerbehälter (4) durch bloße Schwerkraft bis zu einem bestimmten Normalniveau (N) des Schüttmaterials im Zwischenlagerungsbehälter (2).

2. Transportanlage (1) nach Anspruch 1,
**dadurch gekennzeichnet, dass** die dazwischen angeordneten Transportvorrichtungen (5) ein rohrförmiges Element umfassen, welches eine Zuflussöffnung aufweist, die auf einem hohen Niveau angeordnet und mit dem Lagerungsbehälter (4) verbunden ist, und welches eine Ausflussöffnung aufweist, die auf einem niederen Niveau angeordnet ist und in den Zwischenlagerungsbehälter (2) unter dem Normalniveau (N) des Schüttmaterials ausläuft.

3. Transportanlage (1) nach Anspruch 1 oder 2,
**dadurch gekennzeichnet, dass** die Ausflussöffnung auf solch eine Weise angeordnet ist, dass die Menge an Schüttmaterial in dem befüllten Zwischenlagerungsbehälter (2) geringer oder gleich dem Inhalt der Transportvorrichtung (3) ist.

4. Transportanlage (1) nach Anspruch 1, 2 oder 3,
**dadurch gekennzeichnet, dass** die Transportvorrichtung einen Greifer (3) umfasst.

5. Transportanlage (1) nach Anspruch 4,
**dadurch gekennzeichnet, dass** der Greifer (3) ein Doppelgreifer ist.

6. Transportanlage (1) nach Anspruch 4 oder 5,
**dadurch gekennzeichnet, dass** der Greifer (3) eine Wägvorrichtung (11) zum Abwiegen des Inhalts des Greifers (3) umfasst.

7. Transportanlage (1) nach Anspruch 4, 5 oder 6,
**dadurch gekennzeichnet, dass** die Transportanlage (1) eine Schiene (14) zum Verfahren des Greifers (3) umfasst.

8. Transportanlage (1) nach einem der Ansprüche 4 bis 7,
**dadurch gekennzeichnet, dass** die innere Form des Zwischenlagerungsbehälters (2) an die äußere Form des Greifers (3) angepasst ist.

9. Transportanlage (1) nach Anspruch 8,
**dadurch gekennzeichnet, dass** die innere Form des Zwischenlagerungsbehälters (2) an die äußere Form eines geöffneten Greifers (3) angepasst ist.

10. Transportanlage (1) nach einem der Ansprüche 4 bis 9,
**dadurch gekennzeichnet, dass** der Greifer (3) ein automatisch arbeitender Greifer (3) ist und dass die Transportanlage (1) einen Steuerungscomputer (6) zum Steuern des automatisch arbeitenden Greifers (3) umfasst.

11. Transportanlage (1) nach einem der vorhergehenden Ansprüche,
**dadurch gekennzeichnet, dass** die Transportanlage (1) zum Transportieren von pelletförmigem oder körnigem Futter geeignet ist.

12. Fütterungsanlage (17), welche mit einer Transportanlage (1) nach einem der vorhergehenden Ansprüche ausgestattet ist,
**dadurch gekennzeichnet, dass** die Fütterungsanlage (17) wenigstens einen Trog (18) und einen Messbehälter (19, 20) umfasst, welcher über dem Trog (18) angeordnet ist, wobei der Messbehälter (19, 20) mittels der Transportanlage (1) gefüllt und das Schüttmaterial vom Messbehälter (19, 20) in den Trog (18) dosiert werden kann.

13. Fütterungsanlage (17) nach Anspruch 12,
**dadurch gekennzeichnet, dass** die Fütterungsanlage (17) mehrere Tröge (18) umfasst, welche um eine zentrale vertikale Achse angeordnet sind.

## Revendications

1. Installation de transport (1) pour matériau en vrac, avec un container de stockage intermédiaire (2) ayant une ouverture sur son côté supérieur et avec un dispositif de transport (3) pour transporter du matériau en vrac à partir du container de stockage intermédiaire (2), l'installation de transport (1) comprenant un container de stockage (4) pour stocker du matériau en vrac, **caractérisée en ce qu'**elle comprend un dispositif de transport intermédiaire (5) pour remplir automatiquement le container de stockage intermédiaire (2) à partir du container de stockage (4) uniquement par force de gravitation jusqu'à un certain niveau normal (N) de matériau en vrac dans le container de stockage intermédiaire (2).

2. Installation de transport (1) selon la revendication 1, **caractérisée en ce que** le dispositif de transport intermédiaire (5) comprend un élément en forme de tube ayant une ouverture d'entrée, disposée à un niveau élevé et reliée au container de stockage (4), et ayant une ouverture de sortie, disposée à un niveau bas et débouchant dans le container de stockage intermédiaire (2) en dessous du niveau normal (N) du matériau en vrac.

3. Installation de transport (1) selon la revendication 1 ou 2, **caractérisée en ce que** l'ouverture de sortie est disposée de telle manière que la quantité de matériau en vrac dans le container de stockage intermédiaire (2) rempli est inférieure ou égale à la contenance du dispositif de transport (3).

4. Installation de transport (1) selon la revendication 1, 2 ou 3, **caractérisée en ce que** le dispositif de transport comprend un élément de préhension (3).

5. Installation de transport (1) selon la revendication 4, **caractérisée en ce que** l'élément de préhension (3) est un élément de préhension double.

6. Installation de transport (1) selon la revendication 4 ou 5, **caractérisée en ce que** l'élément de préhension (3) comprend un dispositif de pesage (11) pour peser le contenu de l'élément de préhension (3).

7. Installation de transport (1) selon la revendication 4, 5 ou 6, **caractérisée en ce que** l'installation de transport (1) comprend un rail (14) pour déplacer l'élément de préhension (3).

8. Installation de transport (1) selon l'une quelconque des revendications 4 à 7, **caractérisée en ce que** la forme interne du container de stockage intermédiaire (2) est adaptée à la forme externe de l'élément de préhension (3).

9. Installation de transport (1) selon la revendication 8, **caractérisée en ce que** la forme interne du container de stockage intermédiaire (2) est adaptée à la forme externe d'un élément de préhension (3) ouvert.

10. Installation de transport (1) selon l'une quelconque des revendications 4 à 9, **caractérisée en ce que** l'élément de préhension (3) est un élément de préhension à actionnement automatique (3) et **en ce que** l'installation de transport (1) comprend un ordinateur de commande (6) pour commander l'élément de préhension à actionnement automatique (3).

11. Installation de transport (1) selon l'une quelconque des revendications précédentes, **caractérisée en ce que** l'installation de transport (1) est adaptée pour transporter des aliments granulaires ou en forme de pastilles.

12. Installation d'alimentation (17) munie d'une installation de transport (1) selon l'une quelconque des revendications précédentes, **caractérisée en ce que** l'installation d'alimentation (17) comprend au moins une mangeoire (18) et un container de dosage (19, 20) disposé au-dessus de la mangeoire (18), le container de dosage (19, 20) étant apte à être rempli au moyen de l'installation de transport (1) et le matériau en vrac étant ape à être amené, depuis le contenant de dosage (19, 20), dans la mangeoire (18).

13. Installation d'alimentation (17) selon la revendication 12, **caractérisée en ce que** l'installation d'alimentation (17) comprend plusieurs mangeoires (18) disposées autour d'un axe vertical central.
